(19) Europäisches Patentamt
European Patent Office
Office européen des brevets

(11) Publication number: **0 049 484**
**B1**

(12) # EUROPEAN PATENT SPECIFICATION

(45) Date of publication of patent specification: **19.12.84**

(51) Int. Cl.$^3$: **C 09 K 7/06**

(21) Application number: **81107810.4**

(22) Date of filing: **01.10.81**

(54) **A process for the production of a fluid loss reducing additive for an oil-based well working fluid.**

(30) Priority: **07.10.80 GB 8032277**

(43) Date of publication of application:
**14.04.82 Bulletin 82/15**

(45) Publication of the grant of the patent:
**19.12.84 Bulletin 84/51**

(84) Designated Contracting States:
**AT BE CH DE FR GB IT LI NL SE**

(56) References cited:
**US-A-3 494 865**
**US-A-3 671 427**
**US-A-3 775 447**

**The file contains technical information submitted after the application was filed and not included in this specification**

(73) Proprietor: **BW Mud Ltd.**
**31 Melville Street**
**Edinburgh EH3 7JQ Scotland (GB)**

(72) Inventor: **Frost, David**
**25 Park View Court**
**Poplar Grove Woking (GB)**

(74) Representative: **Grubb, Philip William**
**c/o B.A. Yorke & Co 98 The Centre**
**Feltham Middlesex TW13 4EP (GB)**

**EP 0 049 484 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The invention relates to the preparation of improved fluid loss reducing additives for use in oil based drilling, completion and packer fluids and to the products so obtained.

In the drilling of wells by the rotary drilling technique drilling fluid is circulated from tanks at the wellhead down the inside of the drill-pipe, through the bit and back up the annulus. On reaching the wellhead the fluids are subjected to a number of treatments designed to remove gases or solid materials such as drilled cuttings, sand, colloidal material, etc. from the fluid before being returned to the well via the mud tanks. During the course of this circulation the properties of the drilling fluid change due to a number of factors such as ingress of water or fine solids or temperature degradation of the components of the fluid. As a result the fluid is treated to regenerate the required properties and this treatment generally involves the addition of chemicals.

As the total reserves of oil diminish it has become necessary to drill in areas which were previously inaccessible due to technological or economic difficulties. This has led to the development of increasingly sophisticated drilling fluids and in particular to the widespread use of oil-based fluids. These have a number of advantages over conventional water-based drilling fluids.

Oil-based fluids are less prone to thermal degradation than water-based fluids and as a result are used to drill deep hot holes.

In order to drill effectively from offshore platforms economics dictate that as much of the field as possible should be exploited from each platform. This has led to an increase in the number of deviated wells and also to an increase in the maximum angle of deviation. The latter causes a marked increas in the torque required to maintain rotation of the drill-string. Oil-based drilling fluids exhibit extremely good lubricity compared with water based fluids and have proved particularly effective in the drilling of deviated wells.

Drilling through hydratable shales has proved troublesome due to the swelling and sloughing of these formations on contact with aqueous drilling fluids. The problem is common throughout the world and not only leads to wellbores which are out of gauge but also to torque and stuck-pipe problems. Oil-based drilling fluids do not affect most shales and are ideally suited to drilling through these formations.

In order to achieve maximum production rate from a well it is important that the fluid used to penetrate the production zone and the subsequent completion fluid do not damage the formation. Oil-based drilling fluids are designed to give a filtrate consisting only of oil and since this is essentially native to the production formation it does not lead to a reduction in permeability. Aqueous fluids can cause loss of productivity due to pore contraction and blocking as a result of the hydration of clays.

Other types of fluid which are used in well-working operations include completion fluids and packer fluids. Completion fluids are used to flush out the well before it is cemented and the metal casing is inserted. Packer fluids are then used to fill the annular space between the casing and the walls of the hole. Because these fluids remain in contact with metal surfaces over prolonged periods, corrosion is a serious problem; here oil based packer fluids have the advantage of being essentially non-corrosive.

Drilling fluids, completion fluids and packer fluids are referred to generally in this specification as "well-working fluids", or "muds".

Oil-based well-working fluids can be classified as true oil muds and invert emulsion muds. The former contain only a small amount of water whilst the latter may contain up to 40% water as the dispersed phase of an invert (water-in-oil) emulsion. Each of these fluids may contain a number of additives such as emulsifiers, viscosifiers, fluid loss reducing additives and various inorganic salts.

Fluid loss reducing additives are added to minimise loss of the well-working fluid by filtration of the fluid through porous strata. Such products are generally asphaltic or lignitic.

Known lignitic fluid loss reducing additives for oil-based well working fluids are prepared by reacting humic acid (the alkali-soluble fraction of lignite) in free acid or sodium salt form with a long chain alkyl substituted amine or ammonium salt in an aqueous medium. The products are dried and then dispersed in an oil-based well-working fluid, generally with the aid of various organic compounds, as dispersing agents.

Other lignitic fluid loss reducing additives may be prepared by reacting humic acid with the partial fatty acid amide of a polyalkylene polyamine, either in an aqueous medium or by heating in an oil.

It has now been found that lignite may be treated in an oil medium with an amine or amide-amine, or a salt thereof, containing at least one long chain alkyl or alkenyl group, without application of heat, to give a product having superior fluid loss reducing activity.

The product is obtained by a simple mixing process and it is unnecessary to isolate the humic acid in its sodium salt form or to isolate the substituted ammonium humate and subsequently disperse it in the oil-based fluid.

Accordingly, the present invention provides a process for the production of a fluid loss reducing additive for an oil-based well-working fluid comprising the step of mixing together lignite or humic acid with an oil-soluble or oil-dispersible amine salt, amide-amine or amide-amine salt containing at least one alkyl, alkenyl or acyl radical having from 12 to 22 carbon atoms in a straight chain, in an oil or oil-based fluid at a

temperature not greater than 70°C, preferably not greater than 50°C.

The particle size of the lignite is not critical but is preferably less than 500 μm. The presence of a few larger particles does not necessarily detract from the performance of the products, but may lead to settlement during prolonged storage. In a preferred embodiment of the present invention the mixing conditions are such that larger particles are broken down during the course of the preparation of the products.

The amine salts and other amine derivatives for use in the process of the invention all contain a group $R_x$— or $R_yCO$— where $R_x$ is an alkyl or alkenyl group which may be linear or branched, but which contains a straight chain of from 12 to 22 carbon atoms, and $R_y$ is a corresponding group containing a straight chain of from 11 to 21 carbon atoms. Preferably $R_x$ is a linear group for example stearyl, oleyl, linoleyl, palmityl, or mixtures containing primarily linear $C_{12-22}$ alkyl or alkenyl groups, and $R_yCO$— is the corresponding stearoyl, oleoyl, linoleoyl or palmitoyl group.

Preferred amine salts are those of formula I

$$R_1R_2R_3\overset{\oplus}{N}H\ X^{\ominus} \qquad I$$

in which either

$R_1$ is $R_x$ or $R_xNHA$— where A is $C_{2-6}$ alkylene, and

$R_2$ and $R_3$, independently, are $R_x$, hydrogen, $C_{1-12}$ alkyl, phenyl or benzyl or together with the nitrogen atom to which they are attached form a 5- or 6-membered heterocyclic ring; or

$R_1$ and $R_2$ together with the nitrogen atom to which they are attached, form an imidazoline ring bearing an $R_x$ substituent and

$R_3$ is a $NH_2$—A— group where A is defined above

or a fatty acid amide thereof; and

$X^{\ominus}$ is an anion.

The anion $X^{\ominus}$ is preferably an anion of phosphoric acid or of an organic fatty acid, and is preferably of formula $R_y{\cdot}COO^{\ominus}$.

More preferred amine salts are those of formula Ia—Ic

$$R_x{\cdot}\overset{\oplus}{N}H_3\ R_yCOO^{\ominus} \qquad Ia$$

$$R_xNH{\cdot}(CH_2)_n{\cdot}\overset{\oplus}{N}H_3\ R_yCOO^{\ominus} \qquad Ib$$

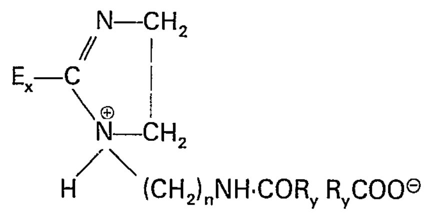

Ic

in which n is 2 or 3. Wherever, as in formula Ic, the same symbol appears more than once in a formula, that symbol may have identical or different significances unless stated otherwise.

Particularly preferred are the compound of formula Ia in which $R_x$ is predominantly n—$C_{15}H_{31}$— and $R_yCOO$— is oleate derived from distilled tall oil fatty acid and that of formula Ic in which n is 2, $R_x$ is oleyl, $R_yCO$— is oleoyl and $R_yCOO^{\ominus}$ is oleate, all derived from distilled tall oil.

Preferred amide-amines are the reaction products of a fatty acid or fatty acid derivative with an alkylene diamine or polyalkylene polyamine, preferably containing from 3 to 7 amine groups. Preferred amide-amines are derived from linear di- or poly-amines of formula II

$$R_4HN\text{—}[\text{—}(CH_2)_n\text{—}NH\text{—}]_x\text{—}(CH_2)_nNH_2 \qquad II$$

in which $R_4$ is H, $R_x$ or $C_{2-6}$ hydroxyalkyl

x=0 or 1—5

and n is as defined above.

Preferably where x=0, $R_4$ is $R_x$ or $C_{2-6}$ hydroxyalkyl, preferably 2-hydroxyethyl and where x=1—5, $R_4$ is H.

The compound of formula II contains (x+2) amine groups, and is capable of reacting with (x+2) moles of fatty acid, without the difficult step of forming two amide groups on the same primary amino group. It is preferred that less than (x+2) moles of acid are reacted, leaving some amine groups free or in salt form. The fully reacted compounds are also useful in the process of the invention, and are included within the definition of amide-amines for the purpose of this specification.

When $R_4$ is hydrogen or hydroxyalkyl, at least part of the fatty acid must be of the formula $R_y{\cdot}COOH$, and preferably whatever the significance of $R_4$, the fatty acid is entirely of formula $R_y{\cdot}COOH$, and is preferably a linear fatty acid such as stearic, oleic, linoleic or palmitic acid, or mixtures of these and other acids for example crude oleic acid derived from tallow or from crude or distilled tall oil, which may contain acids derived from resins, for example abietic acid.

Suitable amide-amines whose unreacted amine groups remain in free base form have a degree of amidation of 30—100%. That is, they are the product of reacting an amine of formula II with 30—100% of the theoretical amount of fatty acid required to amidate once each amine group. Preferably the degree of amidation is 40—80%, more preferably 50—60%.

Preferably, however, after the amidation reaction a sufficient quantity of the same or a different acid is added to convert 15—100% of the unreacted amine groups to the salt form. More preferably 50—100%, particularly 80 to 100%, more particularly 100% of the unreacted amine groups are converted to the salt

form. When at least 15% of the unreacted amine groups will be present in salt form, then the preferred degree of amidation is 10—80%, more preferably 30—80%, most preferably 40 to 70%. Preferably, the acid used to form salt groups is phosphoric acid or an organic fatty acid, more preferably the same as that used to form the amide groups.

The reaction of a polyalkylene polyamine with a fatty acid in the preferred proportions will give a complex mixture of reaction products. Those from polyethylene polyamines may cyclise to imidazolines of the type of formula Ic or more complex types, and such products are also useful in the process of the invention and fall within the general term amide-amines. It is preferred, however, that if imidazoline rings are formed, there is sufficient acid present to convert the singly-bonded ring nitrogen atoms at least partially, and preferably completely, to the salt form.

Particularly preferred amide-amines include for example the mono-oleylamide of aminopropyl tallow amine; diethylene triamine di-oleylamide; tetraethylene pentamine tris-oleylamide; and tetraethylene pentamine $2\frac{1}{2}$-oleylamide in which all remaining amine groups are in the oleate salt form. In these compounds the oleyl and oleate groups are preferably derived from tall oil, particularly from distilled tall oil.

A further preferred amide-amine is the reaction product of a high-resin tall oil fatty acid with a polyethylene polyamine, having a primary:secondary:tertiary amine ratio of 7.25:2.25:1 and 0.43 mole/g of primary amine groups, and neutralised to pH 6—8, which is commercially available in the form of a mixture with light oil (<50% oil) under the name Emul (BW Mud Ltd.), and is used as an emulsifier in invert emulsion muds.

The proportion of amine derivative to lignite in the products of the invention may vary between wide limits. If too little amine is used, the lignite tends to separate out; excess of amine is generally not harmful, but may be uneconomic. Typical proportions are in the range of 1:2 to 2:1 lignite:amine by weight, preferably approximately 1:1.

The oil used for the purposes of the present invention is most often diesel oil but may also be one of a number of crude fractions, kerosine etc. The oil chosen should be compatible with the oil-based well-working fluid to which the product will be added.

The product of the present invention is preferably a pourable liquid concentrate which may be added to a well-working fluid as required, for example to make up a new mud or to recondition a used mud. In the concentrate, the ratio of lignite+amine to oil or oil-based liquid is normally from 1:4 to 4:1, preferably 1:2 to 2:1, more preferably 1:1, by weight.

The concentrate is added to the well-working fluid so as to give a concentration of lignite+amine in the fluid of from preferably of from 1 to 10 pounds per barrel (approx. 0.28 to 2.8% wt/vol), more preferably 2—5 p.p.b.

Since it is normally intended that the products of this invention be used without further processing it is advantageous to ensure that settlement of lignite materials does not occur under normal storage conditions. This can be achieved by adding an oleophilic bentonite or an oleophilic attapulgite. Many products of this type are available and their use will be familiar to those skilled in the art.

In most cases only a few percent by weight of these viscosifiers will be required to stabilise the product. It may be advantageous to add a small volume of water to enhance the viscosifying properties of these oleophilic bentonites and attapulgites.

The process of the present invention is carried out by simply mixing the various components. The period and conditions of mixing are not critical but the storage stability of the product is enhanced by applying vigorous shear. The use of a high speed mixer of the Silverson type is particularly preferred in producing products having good fluid loss reducing properties and storage stability.

Mixing is preferably carried out at normal ambient temperature plus whatever temperature rise occurs as a consequence of the mixing process. It is an advantage of the process according to the invention that it is carried out at a temperature below the flash point of diesel oil (70°C).

It is also found that the addition of small quantities of water to the composition gives a more rapid interaction between the amine derivative and the lignite and gives rise to superior fluid loss reducing properties. The water may be added before or during the mixing operation, but it is most desirable that the lignite be oil-wetted before any water is added; that is, the reaction of the lignite with the amine derivative takes place essentially in an oil medium and not in an aqueous medium. Typically the quantity of water used may be from 1% to 15% by weight of the total quantity of lignite plus amine present, preferably 5% to 10% by weight.

The following Examples illustrate the invention:—

Examples 1 to 5

Five products were obtained by mixing a ground North Dakoto lignite with varying quantities of diesel oil, Emul (BW Mud Ltd). and water on a multimixer for four hours. The formulations are summarised in Table 1.

TABLE 1

Formulations for Examples 1 to 5

| | Example 1 | Example 2 | Example 3 | Example 4 | Example 5 |
|---|---|---|---|---|---|
| Lignite | 100 g | 100 g | 100 g | 100 g | 100 g |
| Emul | 100 g | 100 g | 100 g | 50 | 25 g |
| Water | — | 10 ml | 20 ml | 10 ml | 10 ml |
| Diesel Oil | to 350 ml | to 350 ml | to 350 ml | to 350 ml | to 350 ml |

The concentrates of Examples 1 to 5 were tested by blending into diesel oil for 15 minutes on a Hamilton Beach mixer, in amounts ranging from 1—5 ppb (approx 0.28 to 1.4% wt/vol) based on the total weight of the concentrate, and subjecting the products to standard API filtration tests [100 psi, (6.9 bar) ambient temperature 30 min.]. Results superior to a commercial lignitic additive were obtained. Further testing of the concentrate of Examples 1 and 2 in a typical invert oil mud as used in the Brent field in the North Sea under high temperature high pressure conditions [500 psi (34.5 bar) 30 min.] also indicated excellent fluid loss reducing activity.

Example 6

To 350 ml of the product of Example 1 was added 5 g of an oleophilic bentonite. The product was mixed for one hour on a Silverson mixer. No settlement occured on standing for a period of one month.

A similar result was obtained using 5 g of an oleophilic attapulgite to viscosify the product.

Example 7

To 175 ml of diesel oil was added 50 g of Emul followed by 50 g of lignite. The mixture was agitated for 30 minutes on a Silverson mixer. 10 g of an oleophilic bentonite was added together with 5 ml of water and the product mixed for a further one hour. The product showed no signs of settlement over a one month period.

Example 8

a) Preparation of tetraethylene pentamine tris-oleylamide

Under an atmosphere of nitrogen, 185 g of commercial tetraethylene pentamine was added to 867 g of commerical tall oil fatty acid. The reaction temperature during the addition was not greater than 110°C.

After the addition, the reaction mixture was refluxed at 140°C for 1½ hours under nitrogen. After this time, 54 g of water was removed by distillation, employing a maximum vacuum of 400 mm. Hg. combined with a slow nitrogen flow. The reaction mixture was then cooled to 80°C and discharged to yield 998 g of a 3:1 amide of crude oleic acid and tetraethylene pentamine.

b) Preparation of fluid loss control additive

49.5 g Tetraethylene pentamine tris-oleylamide prepared as in a) was dissolved in 135 g diesel oil and mixed at 6,000 rpm using a laboratory Silverson mixer. 46.8 g of lignite was added and stirring continued for 3 minutes, after which 9.4 g of water was added and stirring continued for 2 hours.

48.25 g of this mixture was stirred with 1.75 g of a bentonite clay based viscosifying agent to yield the finished product.

As a laboratory screening test, 10 g of the finished product was mixed with 350 ml of diesel oil at 12,000 rpm for 30 minutes. The product showed excellent fluid loss reduction measured by the API test at 100 psi (6.9 bar) for 30 minutes.

Examples 9—22:

Example 8 was repeated using, in place of the tetraethylene pentamine tris-oleylamide, the same quantity of the following amine derivatives, the oleyl groups being derived from distilled tall oil unless otherwise stated.

Example 9: diethylene triamine bis-oleylamide

Example 10: N-tallow alkyl propylene diamine monooleylamide.

Example 11: 1-(2-oleylamidoethyl)-2-oleylimidazolinium oleate.

Example 12: pentadecylamine oleate

Example 13: diethylene triamine monooleylamide

Example 14: diethylene triamine mono-oleylamide further reacted with 0.5 equivalents of oleic acid.

Example 15: tetraethylene pentamine dioleylamide

Example 16: tetraethylene pentamine tetraoleylamide

Example 17: N-tallow alkyl propylene diamine mono-oleate

Example 18: N-tallow alkyl propylene diamine mono-oleylamide mono-oleate.

Example 19: N-tallow alkyl propylene diamine bis-oleylamide

Example 20: di-(coconut fatty alkyl)amine mono-oleate

Example 21: dimethyl pentadecyl amine mono-oleate

Example 22: N-(2-hydroxyethyl)ethylene diamine bis-oleylamide (oleyl groups based on crude tall oil).

The resulting fluid loss control additives gave excellent to good results in the API filtration test.

**Claims**

1. A process for the production of a fluid loss reducing additive for an oil-based well-working fluid comprising the step of mixing together lignite or humic acid with an oil-soluble or oil-dispersible amine salt, amide-amine or amide-amine salt containing at least one alkyl, alkenyl or acyl radical having from 12 to 22 carbon atoms in a straight chain characterized in that the mixing is carried out in an oil or oil-based fluid at a temperature not greater than 70°C.

2. A process according to Claim 1 in which the amine salt is of formula I

$$R_1R_2R_3\overset{\oplus}{N}H\ X^{\ominus} \qquad I$$

in which either $R_1$ is $R_x$ or $R_xNHA$— where A is $C_{2-6}$ alkylene, and

$R_2$ and $R_3$, independently, are $R_x$, hydrogen, $C_{1-12}$ alkyl, phenyl and benzyl or together with the nitrogen atom to which they are attached form a 5- or 6-membered heterocyclic ring; or

$R_1$ and $R_2$ together with the nitrogen atom to which they are attached, form an imidazoline ring bearing an $R_x$ substituent and

$R_3$ is a $NH_2$—A— group

where A is defined above

or a fatty acid amide thereof; and

$X^{\ominus}$ is an anion where

$R_x$ is an alkyl or alkenyl group containing a straight chain of from 12 to 22 carbon atoms.

3. A process according to Claim 2 in which the anion of the amine salt is an anion of phosphoric acid or of an organic fatty acid.

4. A process according to Claim 1 in which the amide-amine is the reaction product of a linear di- or poly-amine of formula II

$$R_4HN\{(CH_2)_n—NH\}_x—(CH_2)_n—NH_2 \qquad II$$

in which $R_4$ is H, $R_x$ or $C_{2-6}$-hydroxyalkyl X is 0 or 1—5 and

n is 2 or 3 where

$R_x$ is an alkyl or alkenyl group containing a straight chain of from 12 to 22 carbon atoms, with from 30 to 100% of the quantity of a fatty acid of formula $R_y$·COOH— (where $R_y$ is an alkyl or alkenyl group containing a straight chain of from 11 to 21 carbon atoms) which is required to amidate once each amine group in II, any unreacted amine groups remaining in free base form.

5. A process according to Claim 1 in which the amide-amine is the reaction product of a linear di- or poly-amine of formula II

$$R_4HN\{(CH_2)_n—NH\}_x—(CH_2)_n—NH_2 \qquad II$$

in which

$R_4$ is H, $R_x$ or $C_{2-6}$-hydroxyalkyl X is 0 or 1—5 and

n is 2 or 3 where

$R_x$ is an alkyl or alkenyl group containing a straight chain of from 12 to 22 carbon atoms, with from 10 to 80% of the quantity of a fatty acid of from $R_y$·COOH— (where $R_y$ is an alkyl or alkenyl group containing a straight chain of from 11 to 21 carbon atoms) which is required to amidate once each amine group in II, 15—100% of any unreacted amine groups being in salt form.

6. A process according to any one of the preceding claims in which the components are mixed together in the presence of from 1% to 15% by weight of water, based on the total lignite or humic acid plus amine derivative present.

7. A process according to Claim 1 in which the initial temperature of the mixing process is ambient temperature.

8. A process according to Claim 1 in which the mixing process is carried out at a temperature not greater than 50°C.

9. A fluid loss reducing additive for an oil-based well-working fluid prepared by the process of any one of Claims 1 to 8.

10. A process for the protection of an oil-based well-working fluid against fluid loss, characterised by the step of adding to the well-working fluid a fluid loss reducing additive according to Claim 9 in an amount sufficient to give a concentration of lignite or humic acid plus amide derivative of from 1 to 10 pounds per barrel (0.28 to 2.8% wt/vol) in the final well-working fluid.

**Patentansprüche**

1. Verfahren Zur Herstellung eines Flüssigkeitsverluste vermindernden Additives für Bohrlochbearbeitungsflüssigkeiten auf Oelbasis durch Mischung von Braunkohle oder Huminsäure mit einem öllöslichen oder in Oel dispergierbaren Aminsalz, Amidamin oder Amidaminsalz, das mindestens einen Alkyl-, Alkenyl- oder Acylrest mit 12 bis 22 Kohlenstoffatomen in einer geraden Kette enthält, dadurch gekennzeichnet, dass der Mischungsvorgang in einem Oel oder in einer auf Oel basierenden Flüssigkeit bei einer Temperatur, die nicht über 70°C liegt, durchgeführt wird.

2. Verfahren gemäss Anspruch 1, dadurch gekennzeichnet, dass das Aminsalz der Formel I entspricht

$$R_1R_2R_3\overset{\oplus}{N}H\ X^{\ominus} \qquad I$$

worin entweder

$R_1$ für $R_x$ oder $R_xNHA$— steht und A eine $C_{2-6}$-Alkylengruppe ist, und

$R_2$ und $R_3$ unabhängig voneinander $R_x$, Wasserstoff, $C_{1-12}$ Alkyl, Phenyl oder Benzyl bedeuten bzw. zusammen mit dem Stickstoffatom, an dem sie gebunden sind, einen 5- oder 6-gliedrigen heterocyclischen Ring bilden; oder

$R_1$ und $R_2$ zusammen mit dem Stickstoffatom, an dem sie gebunden sind, einen Imidazolinring bilden, der einen $R_x$-Substituenten trägt, und $R_3$ für eine $NH_2A$—Gruppe, wo A wie oben definiert ist, oder ein Fettsäureamid davon steht; und

$X^{\ominus}$ ein Anion ist, wobei

$R_x$ eine Alkyl- oder Alkenylgruppe mit einer geraden Kette von 12 bis 22 Kohlenstoffatomen ist.

3. Verfahren gemäss Anspruch 2, dadurch gekennzeichnet, dass das Anion des Aminsalzes eine Anion der Phosphorsäure oder einer organischen Fettsäure ist.

4. Verfahren gemäss Anspruch 1, dadurch gekennzeichnet, dass das Amidamin ein Reaktionsprodukt eines linearen Di- oder Polyamins der Formel II

$$R_4HN\{(CH_2)_n—NH\}_x—(CH_2)_n—NH_2 \quad II$$

worin

$R_4$ Wasserstoff, $R_x$ oder Hydroxy($C_{2-6}$)alkyl

x 0 oder 1—5

n 2 oder 3 und

$R_x$ eine Alkyl- oder Alkenylgruppe mit einer geraden Kette von 12 bis 22 Kohlenstoffatom ist,

mit einer Fettsäure der Formel $R_y$—COOH (worin $R_y$ eine Alkyl- oder Alkenylgruppe mit einer geraden Kette von 11 bis 21 Kohlenstoffatomen ist) in einer Menge von 30 bis 100% der zur einmaligen Amidierung jeder Amingruppe in der Verbindung der Formel II benötigten Menge ist, wobei jede nicht umgestzte Amingruppe in Form der freien Base verbleibt.

5. Verfahren gemäss Anspruch 1, dadurch gekennzeichnet, dass das Amidamin eine Reaktionsprodukt eines linearen Di- oder Polyamins der Formel II

$$R_4HN\{(CH_2)_n—NH\}_x—(CH_2)_n—NH_2 \quad II$$

worin

$R_x$ Wasserstoff, $R_x$ oder Hydroxy($C_{2-6}$)alkyl

x 0 oder 1—5

n 2 oder 3 und

$R_x$ eine Alky- oder Alkenylgruppe mit einer geraden Kette von 12 bis 22 Kohlenstoffatomen ist,

mit einer Fettsäure der Formel $R_y$-COOH (worin $R_y$ eine Alkyl- oder Alkenylgruppe mit einer geraden Kette von 11 bis 21 Kohlenstoffatomen ist) in einer Menge von 10 bis 80% der zur einmaligen Amidierung jeder Amingruppe in der Verbindung der Formel II benötigten Menge ist, wobei 15 bis 100% der nicht umgestzten Amingruppen in der Salzform vorliegt.

6. Verfahren gemäss einem der vorangehenden Ansprüche, dadurch gekennzeichnet, dass die Komponenten in Gegenwart von 1 bis 15 gewichtsprozent Wasser, bezogen auf das Totalgewicht der vorliegenden Braunkohle oder Huminsäure und Aminderivat, gemischt werden.

7. Verfahren gemäss Anspruch 1, dadurch gekennzeichnet, dass die Anfangstemperatur des Mischungsvorganges Umgebungstemperatur ist.

8. Verfahren gemäss Anspruch 1, dadurch gekennzeichnet, dass der Mischungsvorgang bei einer Temperatur, die nicht über 50°C liegt, durchgeführt wird.

9. Flüssigkeitsverluste vermindernde Additive für Bohrlochbearbeitungsflüssigkeiten, die nach einem Verfahren eines der Ansprüche 1 bis 8 hergestellte wurden.

10. Verfahren zum Schützen einer Bohrlochbearbeitungsflüssigkeit auf Oelbasis gegen Flüssigkeitsverluste, dadurch gekennzeichnet, dass man der Bohrlochbearbeitungsflüssigkeit ein Flüssigkeitsverluste verminderndes Additiv gemäss Anspruch 9 in einer Menge zugibt, die genügt, um in der enhaltenen Bohrlochbearbeitungsflüssigkeit eine Konzentration der Braunkohle oder Huminsäure zusammen mit dem Amidderivat von 1 bis 10 Pfund pro Barrel (0,28 bis 2,8% Gewicht/Volumen) zu erreichen.

**Revendications**

1. Un procédé de préparation d'un additif réduisant les pertes de fluide pour fluide de forage à base huileuse comprenant l'étape de mélanger du lignite ou de l'acide humique avec un sel d'amine, une amide-amine ou un sel d'amide-amine solubles ou dispersables dans l'huile contenant au moins un radical alkyle, alcényle ou acyle ayant de 12 à 22 atoms de carbone en chaîne droite, caractérisé en ce que le mélange est effectué dans une huile ou dans un fluide à base huileuse à un température non supérieure à 70°C.

2. Un procédé selon la revendication 1 dans lequel le sel d'amine est de formule I

$$R_1R_2R_3\overset{\oplus}{N}H \; X^{\ominus}$$

dans laquelle soit

$R_1$ est $R_x$ ou $R_xNHA$— où A est $C_{2-6}$-alkylène, et

$R_2$ et $R_3$, indépendamment, sont $R_x$, l'hydrogène, $C_{1-12}$-alkyle, phényle et benzyle ou forment ensemble, avec l'atome d'azote auquel ils sont liés, un hétérocycle à 5 ou 6 chaînons, soit

$R_1$ et $R_2$ forment ensemble, avec l'atome d'azote auquel ils sont liés, un cycle imidazoline portant un substituant $R_x$ et

$R_3$ est un groupe $NH_2$—A— où A est tel que défini ci-dessus ou un amide d'acide gras de ce groupe, et

$X^{\ominus}$ est un anion où

$R_x$ est un groupe alkyle ou alcényle contenant une chaîne droite de 12 à 22 atoms de carbone.

3. Un procédé selon la revendication 2 dans lequel l'anion du sel d'amine est un anion d'acide phosphorique ou d'un acide gras organique.

4. Un procédé selon la revendication 1 dans lequel l'amide-amine est le produit de réaction d'une di- ou polyamine linéaire de formule II

$$R_4HN\{(CH_2)_n—NH\}_x—(CH_2)_n—NH_2 \quad II$$

dans laquelle

$R_4$ est H, $R_x$ ou $C_{2-6}$-hydroxyalkyle

X est 0 ou 1—5 et

n est 2 ou 3 où

$R_x$ est un groupe alkyl ou alcényle contenant une chaîne droite de 12 à 22 atomes de carbone,

avec de 30 à 100% de la quantité d'un acide grass de formule $R_y$·COOH— (dans laquelle $R_y$ est un groupe alkyle ou alcényle contenant une chaîne droite de 11 à 21 atomes de carbone) qui est nécessaire pour amider une fois chaque groupe amine dans II, tout groupe amine n'ayant pas réagi demeurant sous forme de base libre.

5. Un procédé selon la revendication 1 dans lequel l'amide-amine est le produit de réaction d'une di- ou polyamine linéaire de formule II

$$R_4HN\{(CH_2)_n—NH\}_x—(CH_2)_n—NH_2 \quad II$$

dans lequelle

$R_4$ est H, $R_x$ ou $C_{2-6}$-hydroxyalkyle

X est 0 ou 1—5 et

n est 2 ou 3 où

$R_x$ est un groupe alkyle ou alcényle contenant une chaîne droite de 12 à 22 atomes de carbone,

avec de 10 à 80% de la quantité d'un acide gras de formule $R_y$·COOH— (dans laquelle $R_y$ est un groupe alkyle ou alcényle contenant une chaîne droite de 11 à 21 atomes de carbone) qui est nécessaire pour amider une fois chaque groupe amine dans II, 15—100% de tout groupe amine n'ayant pas réagi étant sous forme de sel.

6. Un procédé selon l'une quelconque des revendications précédentes dans lequel les composants sont mélangés en présence de 1 à 15% en poids d'eau, par rapport à la quantité totale de lignite ou d'acide humique et du dérivé d'amine présents.

7. Un procédé selon la revendication 1 dans lequel la température initiale du procédé de mélange est la température ambiante.

8. Un procédé selon la revendication 1 dans lequel le procédé de mélange est effectué à une température non supérieure à 50°C.

9. Un additif réduisant les pertes de fluide pour fluide de forage à base huileuse préparé selon la procéde de l'une quelconque de revendications 1 à 8.

10. Un procédé de protection d'un fluide de forage à base huileuse contre la perte de fluide, caractérisé par l'étape d'ajouter au fluide de forage un additif réduisant les pertes de fluide selon la revendication 9 en une quantité suffisant pour obtenir une concentration de lignite ou d'acide humique plus le dérivé d'amide de 1 à 10 livres par baril (0,28 à 2,8% p/v) dans le fluide de forage final.